# EUROPEAN PATENT APPLICATION

(11) **EP 4 199 438 A1**
(43) Date of publication of application: **21.06.2023**
(21) Application number: 22213063.5
(22) Date of filing: 13.12.2022
(51) Int. Cl.: H04L 12/46

(54) **ASSIGNMENT OF VXLAN NETWORK IDENTIFIERS AND DATA PLANES**

(30) Priority: 17.12.2021 US 202163290697 P
(71) Applicant: ARRIS Enterprises LLC, Suwanee, GA 30024 (US)
(72) Inventor: LEE, Chien-Hung, TW 33071 Taoyuan City (TW); HUANG, ShengYuan, 11492 Taipei (TW); CHANG, Yuan-Yao, TW 11065 Taipei (TW)
(74) Representative: Openshaw & Co.

(57) **Abstract**

During operation, a computer system may receive, from an electronic device, a VNI assignment message, where the VNI assignment message specifies a range of VNIs for VXLANs and one or more associated data planes. In response, the computer system may compute whether one or more VNIs in the range of VNIs are available. For example, the computer system may communicate with the VXLANs and/or may perform a look-up operation in a data structure in memory with information about VNIs (such as available VNIs and/or unavailable VNIs). When the one or more VNIs are unavailable, the computer system may provide, to the electronic device, an error message. Alternatively, when the one or more VNIs in the range of VNIs are available, the computer system may: modify the one or more data planes that implement the VXLANs with the range of VNIs; and provide, to the electronic device, an acknowledgment message.

## Description

### BACKGROUND

### Field

The described embodiments relate to techniques for user assignment of virtual extensible local area network (VXLAN) network identifiers and associated data planes.

### Related Art

Many electronic devices are capable of wirelessly communicating with other electronic devices. In particular, these electronic devices can include a networking subsystem that implements a network interface for: a cellular network (UMTS, LTE, etc.), a wireless local area network (e.g., a wireless network such as described in the Institute of Electrical and Electronics Engineers (IEEE) 802.11 standard or Bluetooth from the Bluetooth Special Interest Group of Kirkland, Washington), and/or another type of wireless network. For example, many electronic devices communicate with each other via wireless local area networks (WLANs) using an IEEE 802.11-compatible communication protocol (which is sometimes collectively referred to as `Wi-Fi'). In a typical deployment, a Wi-Fi-based WLAN includes one or more access points (or basic service sets or BSSs) that communicate wirelessly with each other and with other electronic devices using Wi-Fi, and that provide access to another network (such as the Internet) via IEEE 802.3 (which is sometimes referred to as `Ethernet').

One challenge associated with large-scale cloud computing deployments, is scalability. VXLAN is a network virtualization technology that attempts to address this problem. Notably, VXLAN uses a virtual local area network (VLAN)-like encapsulation technique to encapsulate Open Systems Interconnection (OSI) model data link layer (or layer 2) Ethernet frames over a network layer (or layer 3). Thus, a VXLAN creates a logical overlay network that sits on top of a physical network, thereby enabling the use of virtual networks. Note that a VXLAN header may include a 24-bit field (which is referred to as the VXLAN network identifier or VNI) that is used to uniquely identify a VXLAN.

While the 24-bit VNI increases scalability up to 16 million logical networks, it can be difficult to manage such a large number of logical networks. For example, it can be difficult for a network operator to keep track of the VNIs that are available and to specify new VNIs.

### SUMMARY

The invention is set out in the appended set of claims.

A computer system that facilitates network management is described. This computer system includes: an interface circuit that communicates with an electronic device; a processor; and a memory that stores program instructions, where, when executed by the processor, the program instructions cause the electronic device to perform operations. Notably, during operation, the computer system receives, associated with the electronic device, a VNI assignment message, where the VNI assignment message specifies a range of VNIs for VXLANs and one or more associated data planes. In response, the computer system computes whether one or more VNIs in the range of VNIs are available. When the one or more VNIs are unavailable, the computer system provides, addressed to the electronic device, an error message.

Note that computing whether the one or more VNIs are available may include communicating with the VXLANs. Alternatively, the computer system may compute whether the one or more VNIs are available by performing a look-up operation in a data structure in memory with information about VNIs (such as available VNIs and/or unavailable VNIs).

Moreover, when the one or more VNIs in the range of VNIs are available, the computer system may: modify the one or more data planes that implement the VXLANs with the range of VNIs; and provide, addressed to the electronic device, an acknowledgment message.

In some embodiments, the error message may include instructions for a user interface, which may be displayed on the electronic device (or a display associated with the electronic device).

Furthermore, the computer system may include a controller of computer network devices in at least a network that implements VXLANs.

Additionally, the VXLANs may be associated with multiple locations and/or multiple networks.

In some embodiments, the range of VNIs and the one or more data planes are included in a network segmentation profile for at least a network.

Another embodiment provides the electronic device that performs counterpart operations to at least some of the aforementioned operations of the computer system.

Another embodiment provides a computer-readable storage medium with program instructions for use with one of the aforementioned components. When executed by the component, the program instructions cause the component to perform at least some of the aforementioned operations in one or more of the preceding embodiments.

Another embodiment provides a method, which may be performed by one of the aforementioned components. This method includes at least some of the aforementioned operations in one or more of the preceding embodiments.

This Summary is provided for purposes of illustrating some exemplary embodiments, so as to provide a basic understanding of some aspects of the subject matter described herein. Accordingly, it will be appreciated that the above-described features are examples and should not be construed to narrow the scope of the subject matter described herein in any way. Other features, aspects, and advantages of the subject matter described herein will become apparent from the following Detailed Description, Figures, and Claims.

### BRIEF DESCRIPTION OF THE FIGURES

FIG. 1 is a block diagram illustrating an example of communication among electronic devices in accordance with an embodiment of the present disclosure.
FIG. 2 is a flow diagram illustrating an example of a method for network management using a computer system in FIG. 1 in accordance with an embodiment of the present disclosure.
FIG. 3 is a drawing illustrating an example of communication among the electronic devices in FIG. 1 in accordance with an embodiment of the present disclosure.
FIG. 4 is a drawing illustrating an example of a network-management user interface in accordance with an embodiment of the present disclosure.
FIG. 5 is a drawing illustrating an example of a network-management user interface in accordance with an embodiment of the present disclosure.
FIG. 6 is a block diagram illustrating an example of an electronic device in accordance with an embodiment of the present disclosure.

Note that like reference numerals refer to corresponding parts throughout the drawings. Moreover, multiple instances of the same part are designated by a common prefix separated from an instance number by a dash.

### DETAILED DESCRIPTION

A computer system (such as a controller, which may include one or more computers) that facilitates network management is described. During operation, the computer system may receive, from an electronic device, a VNI assignment message, where the VNI assignment message specifies a range of VNIs for VXLANs and one or more associated data planes. In response, the computer system may compute whether one or more VNIs in the range of VNIs are available. For example, the computer system may communicate with the VXLANs and/or may perform a look-up operation in a data structure in memory with information about VNIs (such as available VNIs and/or unavailable VNIs). When the one or more VNIs are unavailable, the computer system may provide, to the electronic device, an error message. (More generally, the computer system may perform a remedial action.) Alternatively, when the one or more VNIs in the range of VNIs are available, the computer system may: modify the one or more data planes that implement the VXLANs with the range of VNIs; and provide, to the electronic device, an acknowledgment message.

By allowing the range of VNIs and the associated data planes to be specified, these communication techniques may facilitate network management. Notably, by confirming whether the one or more VNIs are available and selectively providing feedback, the communication techniques may allow a user of the electronic device (such as a network operator) to interactively and dynamically assign the range of available VNIs to the one or more data planes. These capabilities may allow the user to quickly and simply specify the range of VNIs, which is helpful given the large number of VNIs that can be specified. Moreover, the capabilities may make it easier for the user to management multiple networks and/or networks associated with different locations. Consequently, the communication techniques may improve the user experience when using or managing the network.

In the discussion that follows, electronic devices or components in a system communicate packets in accordance with a wireless communication protocol, such as: a wireless communication protocol that is compatible with an IEEE 802.11 standard (which is sometimes referred to as 'Wi-Fi^{®},' from the Wi-Fi Alliance of Austin, Texas), Bluetooth, a cellular-telephone network or data network communication protocol (such as a third generation or 3G communication protocol, a fourth generation or 4G communication protocol, e.g., Long Term Evolution or LTE (from the 3rd Generation Partnership Project of Sophia Antipolis, Valbonne, France), LTE Advanced or LTE-A, a fifth generation or 5G communication protocol, or other present or future developed advanced cellular communication protocol), and/or another type of wireless interface (such as another wireless-local-area-network interface). For example, an IEEE 802.11 standard may include one or more of: IEEE 802.11a, IEEE 802.1 1b, IEEE 802.11g, IEEE 802.11-2007, IEEE 802.11n, IEEE 802.11-2012, IEEE 802.11-2016, IEEE 802.11ac, IEEE 802.11ax, IEEE 802.11ba, IEEE 802.11be, or other present or future developed IEEE 802.11 technologies. Moreover, an access point, a radio node, a base station or a switch in the wireless network may communicate with a local or remotely located computer (such as a controller) using a wired communication protocol, such as a wired communication protocol that is compatible with an IEEE 802.3 standard (which is sometimes referred to as `Ethernet'), e.g., an Ethernet II standard. However, a wide variety of communication protocols may be used in the system, including wired and/or wireless communication. In the discussion that follows, Wi-Fi, LTE (or another cellular-telephone communication protocol) and Ethernet are used as illustrative examples.

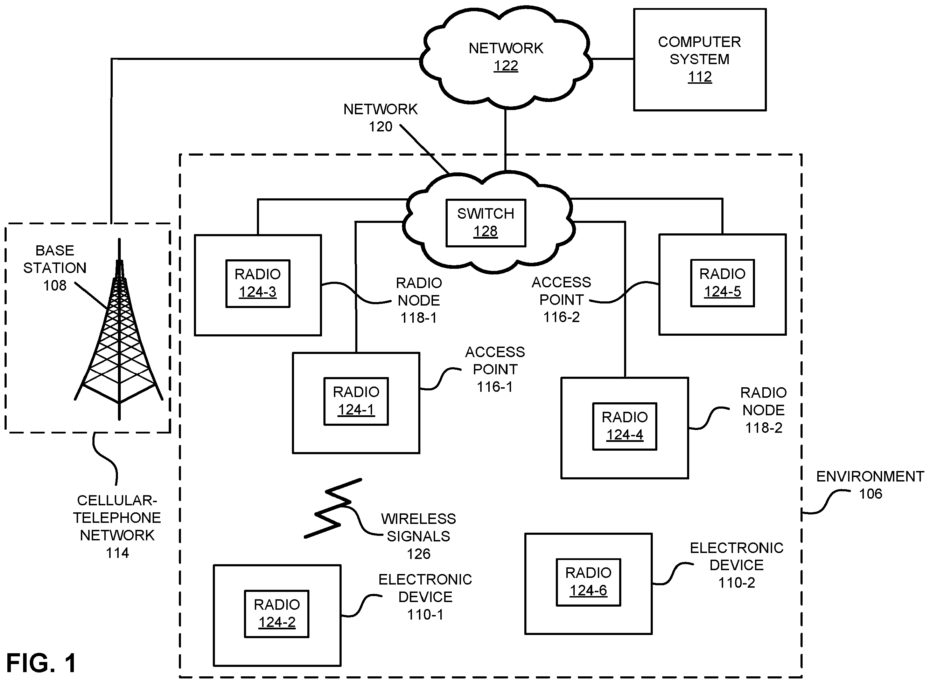

We now describe some embodiments of the communication techniques. FIG. 1 presents a block diagram illustrating an example of communication in an environment 106 with one or more electronic devices 110 (such as cellular telephones, portable electronic devices, stations or clients, another type of electronic device, etc., which are sometimes referred to as `end devices') via a cellular-telephone network 114 (which may include a base station 108), one or more access points 116 (which may communicate using Wi-Fi) in a WLAN and/or one or more radio nodes 118 (which may communicate using LTE) in a small-scale network (such as a small cell). For example, the one or more radio nodes 118 may include: an Evolved Node B (eNodeB), a Universal Mobile Telecommunications System (UMTS) NodeB and radio network controller (RNC), a New Radio (NR) gNB or gNodeB (which communicates with a network with a cellular-telephone communication protocol that is other than LTE), etc. In the discussion that follows, an access point, a radio node or a base station are sometimes referred to generically as a `communication device.' Moreover, as noted previously, one or more base stations (such as base station 108), access points 116, and/or radio nodes 118 may be included in one or more wireless networks, such as: a WLAN, a small cell, and/or a cellular-telephone network. In some embodiments, access points 116 may include a physical access point and/or a virtual access point that is implemented in software in an environment of an electronic device or a computer.

Note that access points 116 and/or radio nodes 118 may communicate with each other and/or computer system 112 (which may be a cloud-based controller that manages and/or configures access points 116, radio nodes 118 and/or switch 128, or that provides cloud-based storage and/or analytical services) using a wired communication protocol (such as Ethernet) via network 120 and/or 122. Note that networks 120 and 122 may be the same or different networks. For example, networks 120 and/or 122 may an LAN, an intra-net or the Internet. In some embodiments, network 120 may include one or more routers and/or switches (such as switch 128).

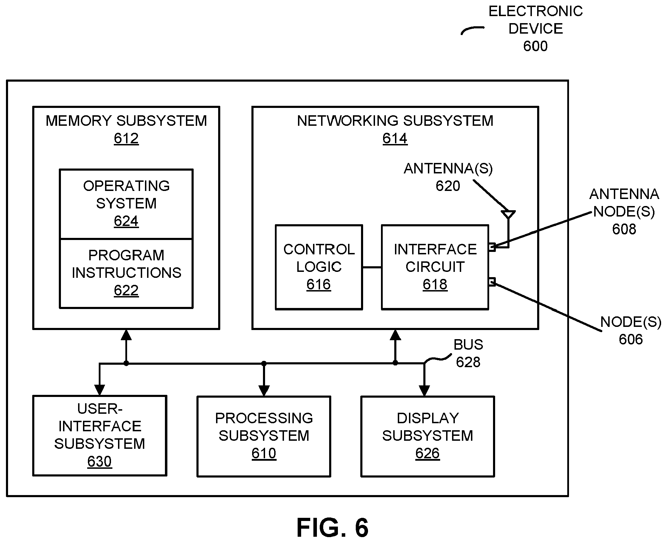

As described further below with reference to FIG. 6, electronic devices 110, computer system 112, access points 116, radio nodes 118 and switch 128 may include subsystems, such as a networking subsystem, a memory subsystem and a processor subsystem. In addition, electronic devices 110, access points 116 and radio nodes 118 may include radios 124 in the networking subsystems. More generally, electronic devices 110, access points 116 and radio nodes 118 can include (or can be included within) any electronic devices with the networking subsystems that enable electronic devices 110, access points 116 and radio nodes 118 to wirelessly communicate with one or more other electronic devices. This wireless communication can comprise transmitting access on wireless channels to enable electronic devices to make initial contact with or detect each other, followed by exchanging subsequent data/management frames (such as connection requests and responses) to establish a connection, configure security options, transmit and receive frames or packets via the connection, etc.

During the communication in FIG. 1, access points 116 and/or radio nodes 118 and electronic devices 110 may wired or wirelessly communicate while: transmitting access requests and receiving access responses on wireless channels, detecting one another by scanning wireless channels, establishing connections (for example, by transmitting connection requests and receiving connection responses), and/or transmitting and receiving frames or packets (which may include information as payloads).

As can be seen in FIG. 1, wireless signals 126 (represented by a jagged line) may be transmitted by radios 124 in, e.g., access points 116 and/or radio nodes 118 and electronic devices 110. For example, radio 124-1 in access point 116-1 may transmit information (such as one or more packets or frames) using wireless signals 126. These wireless signals are received by radios 124 in one or more other electronic devices (such as radio 124-2 in electronic device 110-1). This may allow access point 116-1 to communicate information to other access points 116 and/or electronic device 110-1. Note that wireless signals 126 may convey one or more packets or frames.

In the described embodiments, processing a packet or a frame in access points 116 and/or radio nodes 118 and electronic devices 110 may include: receiving the wireless signals with the packet or the frame; decoding/extracting the packet or the frame from the received wireless signals to acquire the packet or the frame; and processing the packet or the frame to determine information contained in the payload of the packet or the frame.

Note that the wireless communication in FIG. 1 may be characterized by a variety of performance metrics, such as: a data rate for successful communication (which is sometimes referred to as 'throughput'), an error rate (such as a retry or resend rate), a mean-square error of equalized signals relative to an equalization target, intersymbol interference, multipath interference, a signal-to-noise ratio, a width of an eye pattern, a ratio of number of bytes successfully communicated during a time interval (such as 1-10 s) to an estimated maximum number of bytes that can be communicated in the time interval (the latter of which is sometimes referred to as the 'capacity' of a communication channel or link), and/or a ratio of an actual data rate to an estimated data rate (which is sometimes referred to as `utilization'). While instances of radios 124 are shown in components in FIG. 1, one or more of these instances may be different from the other instances of radios 124.

In some embodiments, wireless communication between components in FIG. 1 uses one or more bands of frequencies, such as: 900 MHz, 2.4 GHz, 5 GHz, 6 GHz, 60 GHz, the Citizens Broadband Radio Spectrum or CBRS (e.g., a frequency band near 3.5 GHz), and/or a band of frequencies used by LTE or another cellular-telephone communication protocol or a data communication protocol. Note that the communication between electronic devices may use multi-user transmission (such as orthogonal frequency division multiple access or OFDMA).

Although we describe the network environment shown in FIG. 1 as an example, in alternative embodiments, different numbers or types of electronic devices may be present. For example, some embodiments comprise more or fewer electronic devices. As another example, in another embodiment, different electronic devices are transmitting and/or receiving packets or frames.

As discussed previously, it can be difficult to correctly assign or specify VNIs for VXLANs in a network, such as network 120 or 122.

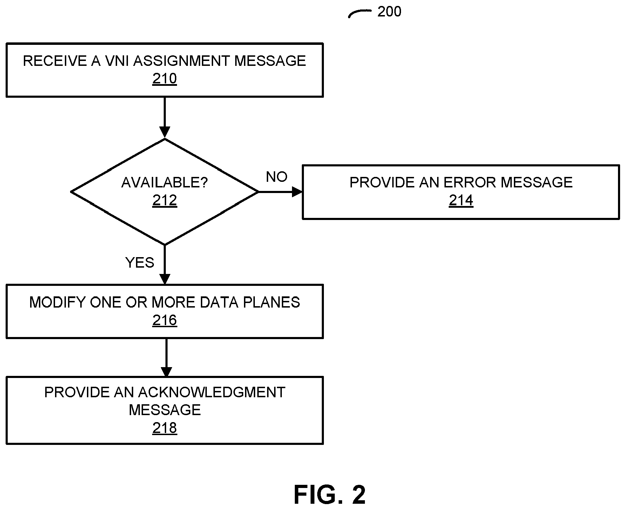

As described further below with reference to FIGs. 2-5, in order to address this problem, computer system 112 may implement the communication techniques to facilitate network management. Notably, an electronic device (such as electronic device 110-1) may provide, to computer system 112, a VNI assignment message, where the VNI assignment message specifies a range of VNIs for VXLANs and one or more associated data planes. For example, for a given data plane (which may implement one or more VXLANs) the range of VNIs may include one or more VNIs.

In response, computer system 112 may computes whether one or more VNIs in the range of VNIs are available (e.g., whether the one or more VNIs are already being used by one or more VXLANs). For example, computing whether the one or more VNIs are available may include communicating with the VXLANs. Alternatively, computer system 112 may compute whether the one or more VNIs are available by performing a look-up operation in a data structure in memory with information about VNIs (such as available VNIs and/or unavailable VNIs).

When the one or more VNIs are unavailable, computer system 112 may provide, to electronic device 110-1, an error message. More generally, computer system 112 may perform a remedial action, such as correcting the error in the range of VNIs or suggesting a correction. Alternatively, when the one or more VNIs in the range of VNIs are available, computer system 112 may: modify the one or more data planes that implement the VXLANs with the range of VNIs; and provide, to electronic device 110-1, an acknowledgment message.

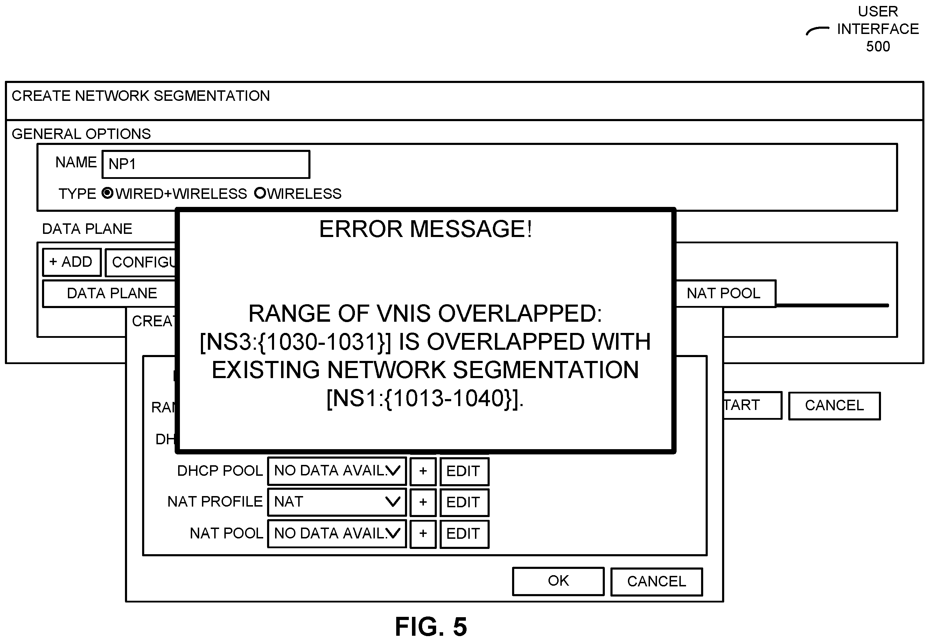

As described further below with reference to FIG. 5, the error message may include instructions for a user interface, which may be displayed on electronic device 110-1 (or a display associated with electronic device 110-1). Additionally, the VXLANs may be associated with multiple locations and/or multiple networks. This, the communication techniques may facilitate multi-site network management. In some embodiments, the range of VNIs and the one or more data planes are included in a network segmentation profile for at least a network.

In this way, the communication techniques may allow computer system 112 to facilitate network management by a user of electronic device 110-1 (such as a network administrator). Moreover, by allowing the user to assign the range of VNIs to the one or more data planes that implement the one or more VXLANs, and then selectively providing feedback (such as the error message or the acknowledgment message), the communication techniques may allow the user to dynamically and interactively manage the assignment of the VNIs. These capabilities may make it easier and less time consuming for the user to perform network management, especially given the large number of potential VNIs. Furthermore, the communication techniques may provide the feedback graphically (e.g., via a user interface), which may be more intuitive and easy to use that a command line interface. Consequently, the communication techniques may improve the user experience when using electronic device 110-1, access point 116-1 and/or the network, or managing the network.

We now describe embodiments of the method. FIG. 2 presents a flow diagram illustrating an example of a method 200 for performing network management using a computer system, such as computer system 112 in FIG. 1. During operation, the computer system may receive, associated with the electronic device, a VNI assignment message (operation 210), where the VNI assignment message specifies a range of VNIs for VXLANs and one or more associated data planes.

In response, the computer system may compute whether one or more VNIs in the range of VNIs are available (operation 212). For example, computing whether the one or more VNIs are available (operation 212) may include communicating with the VXLANs. Alternatively and/or additionally, the computer system may compute whether the one or more VNIs are available (operation 212) by performing a look-up operation in a data structure in memory with information about VNIs (such as available VNIs and/or unavailable VNIs).

When the one or more VNIs are unavailable (operation 212), the computer system may provide, addressed to the electronic device, an error message (operation 214). In some embodiments, the error message may include instructions for a user interface, which may be displayed on the electronic device (or a display associated with the electronic device).

Alternatively, when the one or more VNIs in the range of VNIs are available (operation 212), the computer system may: modify the one or more data planes (operation 216) that implement the VXLANs with the range of VNIs; and provide, addressed to the electronic device, an acknowledgment message (operation 218).

Note that the computer system may include a controller of computer network devices in at least a network that implements VXLANs. Moreover, the VXLANs may be associated with multiple locations and/or multiple networks. In some embodiments, the range of VNIs and the one or more data planes are included in a network segmentation profile for at least a network.

In some embodiments of method 200, there may be additional or fewer operations. Furthermore, the order of the operations may be changed, and/or two or more operations may be combined into a single operation.

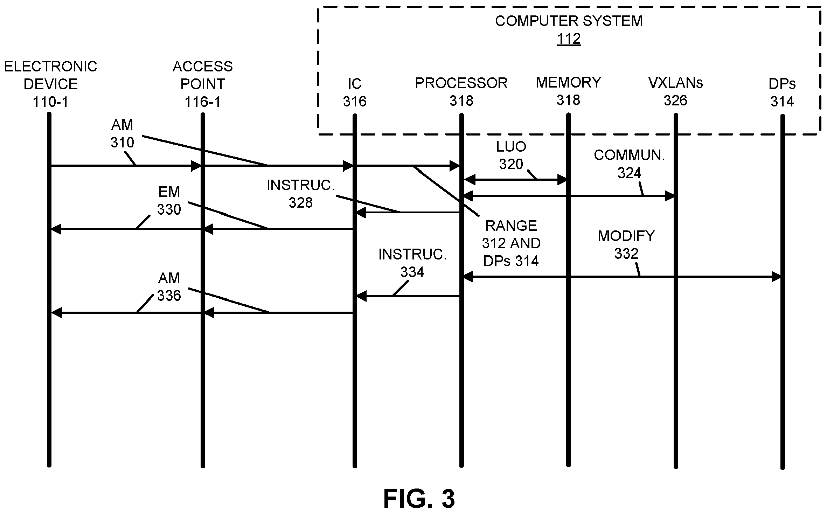

Embodiments of the communication techniques are further illustrated in FIG. 3, which presents a drawing illustrating an example of communication among electronic device 110-1, access point 116-1 and computer system 112. In FIG. 3, an interface circuit in electronic device 110-1 may provide, to computer system 112 via access point 116-1, a VNI assignment message (AM) 310, where the VNI assignment message 310 specifies a range of VNIs (range) 312 for VXLANs and one or more associated data planes (DPs) 314.

After receiving the VNI assignment message 310, an interface circuit 316 in computer system 112 may provide information specifying the range of VNIs 312 and the one or more associated data planes 314 to processor 318 in interface circuit 316. Then, processor 318 may compute whether one or more VNIs in the range of VNIs 312 are available. For example, processor 318 may perform a look-up operation (LUO) 322 in a data structure in memory 320 in computer system 112 with information about VNIs (such as available VNIs and/or unavailable VNIs). Alternatively or additionally, processor 318 may communicate 324 with VXLANs 326 (which may be implemented in computer system 112 and/or another computer system), such as querying whether the one or more VNIs are in used and/or are available, and then receiving responses from VXLANs 326.

When the one or more VNIs are unavailable, processor 318 may instruct 328 interface circuit 316 to provide, to electronic device 110-1 via access point 116-1, an error message (EM) 330. Alternatively, when the one or more VNIs in the range of VNIs are available, processor 318 may: modify 332 the one or more data planes 314 that implement the VXLANs with the range of VNIs; and instruct 334 interface circuit 316 to provide, to electronic device 110-1 via access point 116, an acknowledgment message 336.

While FIG. 3 illustrates communication between components using unidirectional or bidirectional communication with lines having single arrows or double arrows, in general the communication in a given operation in this figure may involve unidirectional or bidirectional communication. Moreover, while FIG. 3 illustrates operations being performed sequentially or at different times, in other embodiments at least some of these operations may, at least in part, be performed concurrently or in parallel.

We now further describe the communication techniques. Notably, while a VLAN may provide or have up to 4096 VLAN identifiers to allow administrators to partition a physical LAN (such as different groups of workstations) into multiple groups of logical isolated broadcast domains. VXLAN technology allows networks to support more VLANs by adding a 24-bit segment identifier called a VXLAN network identifier. However, it is very difficult to maintain VNI uniqueness, let alone ranges of VNI uniqueness, using a command line interface. Moreover, inspecting ranges of VNIs to ensure that there is no overlap is also a challenge. Furthermore, many existing network management systems support a single site (e.g., a computer system that allows a user to setup at most one VXLAN site per configuration operation).

In contrast, the disclosed communication techniques support multiple sites (e.g., a computer system that allows a user to setup multiple VXLAN sites per configuration operation) via controller software using network segmentation profiles. Using the network segmentation profiles, a user can manage massive scale VXLAN network segments, thereby facilitating easy use of data planes. As part of maintaining a network segmentation profile, a user may assign designated ranges of VNIs to data planes, and the uniqueness of the VNIs may be assured by computing and verification the VNIs efficiently and in real-time (e.g., when the range of VNIs is received from the user via a user interface).

Thus, in many existing single-site VXLAN network management systems, a user can only operate on one network segmentation profile at a time (including assigning the segment identifier). For example, the existing VXLAN network management systems, a command line interface may be used to define a VXLAN in two operations. In these approaches, a user may check the existing ranges of VNIs and may then manually verify any subsequent user-assigned new ranges of VNIs. These approaches often result in an inefficient or time-consuming segmentation process that is not user friendly. Moreover, an assigned VNI or segment identifier may cause a VXLAN networking failure if the user does not correctly validate that the designated VNI is unique prior to modifying the network segmentation profile. These challenges are increased as the number of potential VNIs increases.

In contrast, the disclosed communication techniques may provide a multi-site VXLAN network management system, in which a user may be able to modify a network segmentation profile and assign ranges of VNIs in one submit operation. Then, the multi-site VXLAN network management system may automatically verify the ranges of VNIs and provide real-time feedback to the user, e.g., via a user interface. Moreover, the communication techniques may assign the ranges of VNIs to the one or more specified data planes via a corresponding network segmentation profile. In response, the modified one or more data planes may implement one or more VXLANs having the assigned ranges of VNIs. Note that a range of VNIs may include one or more VNIs.

Note that the disclosed communication techniques may automatically ensure VNI (and, more generally, a segment identifier) uniqueness within the whole VXLAN network. Consequently, the ranges of VNIs assigned to the data planes may not overlap with other data planes. For example, NP1 may be an existing network segmentation profile having 3 data planes to support VXLAN networking and each data plane may be assigned a unique range of VNIs, such as NP1={dp1:(101-199), dp2:(200), dp3:(201-255)}. In a valid assignment case, a second network profile may be added, such as NP2={dp1:{256}, dp5 { 257:300}}. Alternatively, in an invalid case, a third network profile may be added, such as NP3={dp1:{188}}, because of the VNI range 188 will overlap with the range of VNI for NP1, i.e., dp1:{101-199}. Moreover, adding a fourth network profile, such as NP4={dp1:(10), dp2:{11:202}}, may also be invalid because of the range of VNIs for dp2 will overlap with the existing range of VNI for NP1 (i.e., dp1:{101-199}) and NP2 (i.e., {200}).

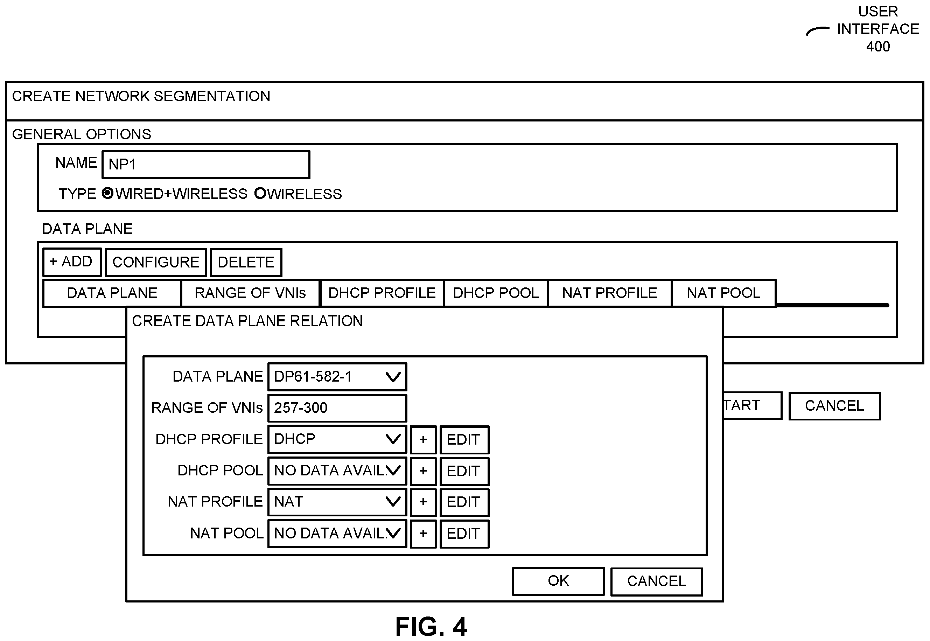

In the communication techniques, the assignment of the range of VNIs may be intuitive and efficient for the user. Moreover, the automatic inspection of the range of VNIs and the subsequent response may be accurate and complete, so that the user can take appropriate corrective action (as needed). In order to keep the user from become a bottleneck when entering ranges of VNIs, the computer system may allow the user to modify a network segmentation profile via a user interface. Notably, the user may be able to assign the designated ranges of VNIs for data planes in an intuitive manner. This is shown in FIG. 4, which presents a drawing illustrating an example of a network-management user interface 400. Note that in a given network segmentation profile, each data plane may have its own range of VNIs with an associated dynamic host configuration profile (DHCP) profile for an Internet Protocol (IP) range.

In response to a user-specified network segmentation profile, the computer system may automatically create an inspection controller that access stored information about existing ranges of VNIs or that collects the existing ranges of VNIs. Then, the computer system may validate the designated range of VNIs with the accessed or collected information. This may reduce the computation complexity.

If an overlap with the designated range of VNIs is detected, the computer system may present an error message to the user via the user interface. This is shown in FIG. 5, which presents a drawing illustrating an example of a network-management user interface 500. Consequently, the user may recognize the overlapped range of VNIs from the computer-system response and may be able to take corrective action, such as modifying the range of VNIs and/or the associated data plane(s).

We now describe embodiments of an electronic device, which may perform at least some of the operations in the communication techniques. FIG. 6 presents a block diagram illustrating an example of an electronic device 600 in accordance with some embodiments, such as one of: base station 108, one of electronic devices 110, computer system 112, one of access points 116, one of radio nodes 118, or switch 128. This electronic device includes processing subsystem 610, memory subsystem 612, and networking subsystem 614. Processing subsystem 610 includes one or more devices configured to perform computational operations. For example, processing subsystem 610 can include one or more microprocessors, graphics processing units (GPUs), ASICs, microcontrollers, programmable-logic devices, and/or one or more digital signal processors (DSPs).

Memory subsystem 612 includes one or more devices for storing data and/or instructions for processing subsystem 610 and networking subsystem 614. For example, memory subsystem 612 can include DRAM, static random access memory (SRAM), and/or other types of memory. In some embodiments, instructions for processing subsystem 610 in memory subsystem 612 include: one or more program modules or sets of instructions (such as program instructions 622 or operating system 624, such as Linux, UNIX, Windows Server, or another customized and proprietary operating system), which may be executed by processing subsystem 610. Note that the one or more computer programs, program modules or instructions may constitute a computer-program mechanism. Moreover, instructions in the various modules in memory subsystem 612 may be implemented in: a high-level procedural language, an object-oriented programming language, and/or in an assembly or machine language. Furthermore, the programming language may be compiled or interpreted, e.g., configurable or configured (which may be used interchangeably in this discussion), to be executed by processing subsystem 610.

In addition, memory subsystem 612 can include mechanisms for controlling access to the memory. In some embodiments, memory subsystem 612 includes a memory hierarchy that comprises one or more caches coupled to a memory in electronic device 600. In some of these embodiments, one or more of the caches is located in processing subsystem 610.

In some embodiments, memory subsystem 612 is coupled to one or more high-capacity mass-storage devices (not shown). For example, memory subsystem 612 can be coupled to a magnetic or optical drive, a solid-state drive, or another type of mass-storage device. In these embodiments, memory subsystem 612 can be used by electronic device 600 as fast-access storage for often-used data, while the mass-storage device is used to store less frequently used data.

Networking subsystem 614 includes one or more devices configured to couple to and communicate on a wired and/or wireless network (i.e., to perform network operations), including: control logic 616, an interface circuit 618 and one or more antennas 620 (or antenna elements). (While FIG. 6 includes one or more antennas 620, in some embodiments electronic device 600 includes one or more nodes, such as antenna nodes 608, e.g., a metal pad or a connector, which can be coupled to the one or more antennas 620, or nodes 606, which can be coupled to a wired or optical connection or link. Thus, electronic device 600 may or may not include the one or more antennas 620. Note that the one or more nodes 606 and/or antenna nodes 608 may constitute input(s) to and/or output(s) from electronic device 600.) For example, networking subsystem 614 can include a Bluetooth^{™} networking system, a cellular networking system (e.g., a 3G/4G/5G network such as UMTS, LTE, etc.), a universal serial bus (USB) networking system, a coaxial interface, a High-Definition Multimedia Interface (HDMI) interface, a networking system based on the standards described in IEEE 802.11 (e.g., a Wi-Fi^{®} networking system), an Ethernet networking system, and/or another networking system.

Note that a transmit or receive antenna pattern (or antenna radiation pattern) of electronic device 600 may be adapted or changed using pattern shapers (such as directors or reflectors) and/or one or more antennas 620 (or antenna elements), which can be independently and selectively electrically coupled to ground to steer the transmit antenna pattern in different directions. Thus, if one or more antennas 620 include N antenna pattern shapers, the one or more antennas may have 2^{N} different antenna pattern configurations. More generally, a given antenna pattern may include amplitudes and/or phases of signals that specify a direction of the main or primary lobe of the given antenna pattern, as well as so-called `exclusion regions' or `exclusion zones' (which are sometimes referred to as 'notches' or `nulls'). Note that an exclusion zone of the given antenna pattern includes a low-intensity region of the given antenna pattern. While the intensity is not necessarily zero in the exclusion zone, it may be below a threshold, such as 3dB or lower than the peak gain of the given antenna pattern. Thus, the given antenna pattern may include a local maximum (e.g., a primary beam) that directs gain in the direction of electronic device 600 that is of interest, and one or more local minima that reduce gain in the direction of other electronic devices that are not of interest. In this way, the given antenna pattern may be selected so that communication that is undesirable (such as with the other electronic devices) is avoided to reduce or eliminate adverse effects, such as interference or crosstalk.

Networking subsystem 614 includes processors, controllers, radios/antennas, sockets/plugs, and/or other devices used for coupling to, communicating on, and handling data and events for each supported networking system. Note that mechanisms used for coupling to, communicating on, and handling data and events on the network for each network system are sometimes collectively referred to as a `network interface' for the network system. Moreover, in some embodiments a 'network' or a 'connection' between the electronic devices does not yet exist. Therefore, electronic device 600 may use the mechanisms in networking subsystem 614 for performing simple wireless communication between the electronic devices, e.g., transmitting advertising or beacon frames and/or scanning for advertising frames transmitted by other electronic devices as described previously.

Within electronic device 600, processing subsystem 610, memory subsystem 612, and networking subsystem 614 are coupled together using bus 628. Bus 628 may include an electrical, optical, and/or electro-optical connection that the subsystems can use to communicate commands and data among one another. Although only one bus 628 is shown for clarity, different embodiments can include a different number or configuration of electrical, optical, and/or electro-optical connections among the subsystems.

In some embodiments, electronic device 600 includes a display subsystem 626 for displaying information on a display, which may include a display driver and the display, such as a liquid-crystal display, a multi-touch touchscreen, etc.

Moreover, electronic device 600 may include a user-interface subsystem 630, such as: a mouse, a keyboard, a trackpad, a stylus, a voice-recognition interface, and/or another human-machine interface. In some embodiments, user-interface subsystem 630 may include or may interact with a touch-sensitive display in display subsystem 626.

Electronic device 600 can be (or can be included in) any electronic device with at least one network interface. For example, electronic device 600 can be (or can be included in): a desktop computer, a laptop computer, a subnotebook/netbook, a server, a tablet computer, a cloud-based computing system, a smartphone, a cellular telephone, a smartwatch, a wearable electronic device, a consumer-electronic device, a portable computing device, an access point, a transceiver, a router, a switch, communication equipment, an eNodeB, a controller, test equipment, and/or another electronic device.

Although specific components are used to describe electronic device 600, in alternative embodiments, different components and/or subsystems may be present in electronic device 600. For example, electronic device 600 may include one or more additional processing subsystems, memory subsystems, networking subsystems, and/or display subsystems. Additionally, one or more of the subsystems may not be present in electronic device 600. Moreover, in some embodiments, electronic device 600 may include one or more additional subsystems that are not shown in FIG. 6. Also, although separate subsystems are shown in FIG. 6, in some embodiments some or all of a given subsystem or component can be integrated into one or more of the other subsystems or component(s) in electronic device 600. For example, in some embodiments instructions 622 is included in operating system 624 and/or control logic 616 is included in interface circuit 618.

Moreover, the circuits and components in electronic device 600 may be implemented using any combination of analog and/or digital circuitry, including: bipolar, PMOS and/or NMOS gates or transistors. Furthermore, signals in these embodiments may include digital signals that have approximately discrete values and/or analog signals that have continuous values. Additionally, components and circuits may be single-ended or differential, and power supplies may be unipolar or bipolar.

An integrated circuit (which is sometimes referred to as a `communication circuit') may implement some or all of the functionality of networking subsystem 614 and/or of electronic device 600. The integrated circuit may include hardware and/or software mechanisms that are used for transmitting wireless signals from electronic device 600 and receiving signals at electronic device 600 from other electronic devices. Aside from the mechanisms herein described, radios are generally known in the art and hence are not described in detail. In general, networking subsystem 614 and/or the integrated circuit can include any number of radios. Note that the radios in multiple-radio embodiments function in a similar way to the described single-radio embodiments.

In some embodiments, networking subsystem 614 and/or the integrated circuit include a configuration mechanism (such as one or more hardware and/or software mechanisms) that configures the radio(s) to transmit and/or receive on a given communication channel (e.g., a given carrier frequency). For example, in some embodiments, the configuration mechanism can be used to switch the radio from monitoring and/or transmitting on a given communication channel to monitoring and/or transmitting on a different communication channel. (Note that 'monitoring' as used herein comprises receiving signals from other electronic devices and possibly performing one or more processing operations on the received signals).

In some embodiments, an output of a process for designing the integrated circuit, or a portion of the integrated circuit, which includes one or more of the circuits described herein may be a computer-readable medium such as, for example, a magnetic tape or an optical or magnetic disk. The computer-readable medium may be encoded with data structures or other information describing circuitry that may be physically instantiated as the integrated circuit or the portion of the integrated circuit. Although various formats may be used for such encoding, these data structures are commonly written in: Caltech Intermediate Format (CIF), Calma GDS II Stream Format (GDSII) or Electronic Design Interchange Format (EDIF), OpenAccess (OA), or Open Artwork System Interchange Standard (OASIS). Those of skill in the art of integrated circuit design can develop such data structures from schematics of the type detailed above and the corresponding descriptions and encode the data structures on the computer-readable medium. Those of skill in the art of integrated circuit fabrication can use such encoded data to fabricate integrated circuits that include one or more of the circuits described herein.

While the preceding discussion used Wi-Fi, LTE and/or Ethernet communication protocols as illustrative examples, in other embodiments a wide variety of communication protocols and, more generally, communication techniques may be used. Thus, the communication techniques may be used in a variety of network interfaces. Furthermore, while some of the operations in the preceding embodiments were implemented in hardware or software, in general the operations in the preceding embodiments can be implemented in a wide variety of configurations and architectures. Therefore, some or all of the operations in the preceding embodiments may be performed in hardware, in software or both. For example, at least some of the operations in the communication techniques may be implemented using program instructions 622, operating system 624 (such as a driver for interface circuit 618) or in firmware in interface circuit 618. Alternatively or additionally, at least some of the operations in the communication techniques may be implemented in a physical layer, such as hardware in interface circuit 618.

Note that the use of the phrases `capable of,' `capable to,' `operable to,' or `configured to' in one or more embodiments, refers to some apparatus, logic, hardware, and/or element designed in such a way to enable use of the apparatus, logic, hardware, and/or element in a specified manner.

While examples of numerical values are provided in the preceding discussion, in other embodiments different numerical values are used. Consequently, the numerical values provided are not intended to be limiting.

In the preceding description, we refer to `some embodiments.' Note that `some embodiments' describes a subset of all of the possible embodiments, but does not always specify the same subset of embodiments.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed.

## Claims

1. A computer system (112), comprising:
an interface circuit (618) configured to communicate with an electronic device (110-1);
a processor (610) coupled to the interface circuit; and
memory (612), coupled to the processor, configured to store program instructions (622), wherein, when executed by the processor, the program instructions cause the electronic device to perform operations comprising:
receiving (210), associated with the electronic device, a virtual extensible local area network, VXLAN, network identifier, VNI, assignment message (310), wherein the VNI assignment message specifies a range (312) of VNIs for VXLANs and one or more associated data planes (314);
computing (212) whether one or more VNIs in the range of VNIs are available; and
when the one or more VNIs are unavailable (212), providing (214), addressed to the electronic device, an error message (330).

2. The computer system of claim 1, wherein the computer system comprises a controller of computer network devices in at least a network (120) that implements the VXLANs.

3. The computer system of any preceding claim, wherein computing whether the one or more VNIs are available comprises communicating (324) with the VXLANs.

4. The computer system of any preceding claim, wherein computing whether the one or more VNIs are available comprises performing a look-up operation (320) in a data structure in memory (318) with information about VNIs.

5. The computer system of claim 4, wherein the information about VNIs comprises: available VNIs, unavailable VNIs, or both.

6. The computer system of any preceding claim, wherein, when the one or more VNIs in the range of VNIs are available, the operations comprise:
modifying (332) the one or more data planes that implement the VXLANs with the range of VNIs; and
providing, addressed to the electronic device, an acknowledgment message (336).

7. The computer system of any preceding claim, wherein the error message comprises instructions for a user interface.

8. The computer system of any preceding claim, wherein the VXLANs are associated with: multiple locations, multiple networks, or both.

9. The computer system of any preceding claim, wherein the range of VNIs and the one or more data planes are included in a network segmentation profile for at least a network.

10. A non-transitory computer-readable storage medium for use in conjunction with a computer system (112), the computer-readable storage medium (612) storing program instructions (622) that, when executed by the computer system, cause the computer system to perform operations comprising:
receiving (210), associated with an electronic device (110-1), a virtual extensible local area network, VXLAN, network identifier, VNI, assignment message (310), wherein the VNI assignment message specifies a range of VNIs (312) for VXLANs and one or more associated data planes (314);
computing (212) whether one or more VNIs in the range of VNIs are available; and
when the one or more VNIs are unavailable (212), providing (214), addressed to the electronic device, an error message (330).

11. The non-transitory computer-readable storage medium of claim 10, wherein computing whether the one or more VNIs are available comprises: communicating (324) with the VXLANs; or performing a look-up operation (320) in a data structure in memory (318) with information about VNIs.

12. The non-transitory computer-readable storage medium of any one of claims 10-11, wherein, when the one or more VNIs in the range of VNIs are available, the operations comprise:
modifying (332) the one or more data planes that implement the VXLANs with the range of VNIs; and
providing, addressed to the electronic device, an acknowledgment message (336).

13. A method (200) for performing network management, comprising:
by a computer system (112):
receiving (210), associated with an electronic device (110-1), a virtual extensible local area network, VXLAN, network identifier, VNI, assignment message (310), wherein the VNI assignment message specifies a range of VNIs (312) for VXLANs and one or more associated data planes (314);
computing (212) whether one or more VNIs in the range of VNIs are available; and
when the one or more VNIs are unavailable (212), providing (214), addressed to the electronic device, an error message (330).

14. The method of claim 13, wherein computing whether the one or more VNIs are available comprises: communicating (324) with the VXLANs; or performing a look-up operation (320) in a data structure in memory (318) with information about VNIs.

15. The method of any one of claims 13-14, wherein, when the one or more VNIs in the range of VNIs are available, the method comprises:
modifying (332) the one or more data planes that implement the VXLANs with the range of VNIs; and
providing, addressed to the electronic device, an acknowledgment message (336).
